# EUROPEAN PATENT APPLICATION

(11) **EP 3 806 014 A1**
(43) Date of publication of application: **14.04.2021**
(21) Application number: 20198359.0
(22) Date of filing: 25.09.2020
(51) Int. Cl.: G06Q 10/10, G06Q 50/10, G06F 16/23

(54) **COORDINATION PLATFORM SYSTEM, INFORMATION COORDINATION METHOD, AND INFORMATION COORDINATION BRIDGE DEVICE**

(30) Priority: 11.10.2019 JP 2019187712
(71) Applicant: Hitachi, Ltd., Tokyo 100-8280 (JP)
(72) Inventor: SHOMURA, Yusuke, Tokyo, 100-8280 (JP); FUCHIWAKI, Makoto, Tokyo, 100-8280 (JP); YOSHIHARA, Jun, Tokyo, 100-8280 (JP); KINOSITA, Masafumi, Tokyo, 100-8280 (JP); OTSU, Kenji, Tokyo, 100-8280 (JP)
(74) Representative: MERH-IP Matias Erny Reichl Hoffmann Patentanwälte PartG mbB

(57) **Abstract**

There is provided an information coordination platform system that coordinates a plurality of organizations that each manages customer information including a plurality of pieces of item information regarding a customer with each other. An information coordination bridge manages association information for associating the organizations for the customer to be coordinated with at least one item information between at least two organizations and the item information, and records data update information indicating the organizations, the customer, and the item information when the item information of the customer is updated in any organization. An information coordination server notifies the organization associated with the organization in which the item information is updated in the association information of a fact that the item information of the customer is updated based on the data update information.

## Description

### BACKGROUND OF THE INVENTION

### 1. Field of the Invention

The present invention relates to a technology for coordinating information between organizations.

### 2. Description of the Related Art

Movements to reduce costs and create new businesses by utilizing a huge amount of IoT data in the world have been widely noticed. Efforts to convert the IoT data into value have been performed by using IT and IoT systems. In such efforts, data that is acquired and managed by each organization such as a company in each organization and published open data have been utilized by information systems.

In contrast, in Society 5.0 which is a future social concept from Japan, a concept of "data coordination platform" that creates value by coordinating information acquired and managed in fields such as autonomous driving, infrastructure, agriculture, medical care, and finance has been proposed. In response to such a concept, efforts to create new businesses by coordinating the information across organizations in the respective fields have been widely performed.

However, in the coordination of the information across the organizations, the authentication and coordination of individuals become problems. Regarding such a problem, WO03/105002A1 discloses a technology for authenticating an individual for general use and associating the individual with personal information. WO03/105002A1 discloses a general-purpose system capable of authenticating the individual within the organization.

The system of WO03/105002A1 includes an online data processing system such as a WEB server accessed from a user terminal, and an authentication authority system connected to the online data processing system via a network.

This online data processing system includes an electronic certificate reception unit that receives an electronic certificate transmitted from the user terminal, and an authentication unit that authenticates a user by transmitting and receiving data to and from the authentication authority system. An authentication database is provided in the authentication authority system, and business type identification data such as a company code and personal authentication data for authenticating the individual within the organization by associating a business type with the individual are stored. The user is authenticated based on authentication information which is extracted from the authentication database and includes at least authority information of the individual within the organization.

### SUMMARY OF THE INVENTION

Here, a service that provides information in accordance with a lifetime event of a customer is used as an example of a service using information to be coordinated between the organizations. For example, when an event of movement of the customer occurs, vendors that provide services associated with housing have high order reception chances. At the same time, there is an advantage that the customer can collect useful information from the vendors.

For example, since a real estate agent who obtains a contract for a new house when the customer moves acquires information regarding the customer, when this information can be notified to other organizations in a timely manner based on the consent of the customer, other organizations can suggest that the customer subscribes to their services in their new home. For example, when an electric power retailer can obtain information on a new house, it is possible to efficiently offer a proposal to switch the contract in the new house and a proposal to discount a service. Time and effort required for the customer to collect necessary information related to the movement are reduced. As described above, both the organization and the individual customer have advantages.

Here, it is important for the customer to be able to freely determine a range in which information among the information related to the lifetime event and an organization that shares the information are determined. That is, the information regarding the lifetime event is efficiently notified in a timely manner between the organizations permitted for the coordination of the information by the customer, and organizations which are not permitted for the coordination of the information by the customer are required to conceal that the information of the customer is updated.

However, such a requirement cannot be met only by applying the technology of WO03/105002A1. The technology of WO03/105002A1 can authenticate the individual within the organization, but does not assume that the personal information is coordinated across a plurality of organizations.

One object of the present disclosure is to provide a technology for allowing a plurality of organizations to coordinate information managed by the respective organizations.

A coordination platform system disclosed in order to achieve the object is an information coordination platform system that coordinates a plurality of organizations that each manages customer information including a plurality of pieces of item information regarding a customer with each other. The system includes an identification information management unit that manages association information for associating the organizations for the customer to be associated with at least one item information between at least two organizations and the item information, a data update registration unit that records data update information indicating the organizations, the customer, and the item information when the item information of the customer is updated in any of the organizations, and/or a notification generation unit that notifies the organization associated with the organization in which the item information is updated in the association information of a fact that the item information of the customer is updated based on the data update information.

In this specification, the customer is a "person or an organization that receives a service" and is also called a service beneficiary.

According to the present disclosure, it is possible to coordinate information managed by a plurality of organizations.

### BRIEF DESCRIPTION OF THE DRAWINGS

Figs. 1A and 1B are block diagrams illustrating an example of an information coordination platform system according to the present embodiment;
Fig. 2 is a block diagram illustrating an example of hardware and functions included in an information coordination bridge server illustrated in Figs. 1A and 1B;
Fig. 3 is a block diagram illustrating an example of hardware and functions included in an information coordination server illustrated in Figs. 1A and 1B;
Fig. 4 is a diagram illustrating an example of a customer DB stored in a DB server of each organization illustrated in Figs. 1A and 1B;
Fig. 5 is a diagram illustrating an example of a customer ID Seed table illustrated in Fig. 2;
Fig. 6 is a diagram illustrating an example of a customer ID master table illustrated in Fig. 2;
Fig. 7 is a diagram illustrating an example of a notification message queue illustrated in Fig. 2;
Fig. 8 is a diagram illustrating an example of a data update log illustrated in Fig. 3;
Fig. 9 is a diagram illustrating an example of an account association table illustrated in Fig. 3;
Fig. 10 is a diagram illustrating an example of an information notification log illustrated in Fig. 3;
Fig. 11 is a diagram illustrating an example of an information coordination range update screen transmitted to a client device from the information coordination bridge server illustrated in Figs. 1A and 1B;
Fig. 12 is a diagram illustrating an example of processing of a data update registration program illustrated in Fig. 2;
Fig. 13 is a diagram illustrating an example of processing of a notification generation program illustrated in Fig. 3;
Fig. 14 is a diagram illustrating an example of a notification detection program illustrated in Fig. 2;
Fig. 15 is a sequence diagram illustrating an example of processing when an ID management program illustrated in Fig. 2 adds an information coordination range; and
Fig. 16 is a sequence diagram illustrating an example of processing when the ID management program illustrated in Fig. 2 updates the information coordination range.

### DESCRIPTION OF THE PREFERRED EMBODIMENTS

Hereinafter, an embodiment of the present invention will be described with reference to the drawings.

The definition of personal information in the present embodiment is information regarding a living individual according to the revised Personal Information Protection Act, and is information for identifying a specific individual by a name, a date of birth, or other descriptions included in the information and a personal identification code (hereinafter, referred to as ID information). Among the personal information, key information used for personal authentication in combination with the ID information is defined as authentication information.

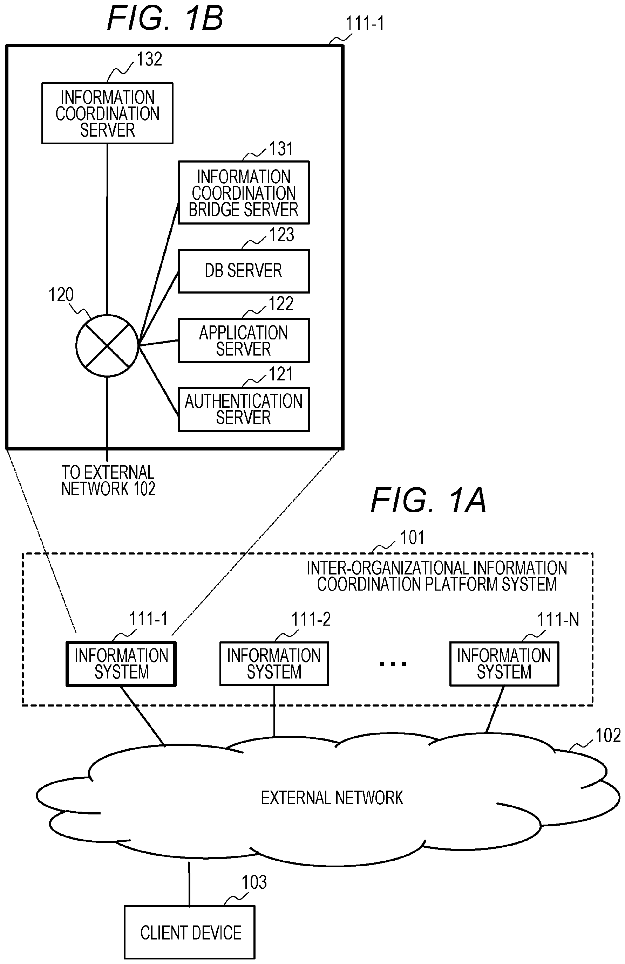

Fig. 1 is a block diagram illustrating an example of an information coordination platform system of the present embodiment. (a) is a diagram illustrating a configuration of the whole system. (b) is a diagram illustrating a configuration of an information system 111-1. Configurations of information systems 111-2 to 111-N are similar to the configuration of the information system 111-1.

In Fig. 1, the information systems 111-1 to 111-N provided in organizations are mutually connectable via an external network 102 and an internal network 120 which are communication facility networks, and an inter-organizational information coordination platform system 101 connectable to a client device 103 is illustrated.

Each of the information systems 111-1 to 111-N provided in the organizations includes an authentication server 121, an application server 122, a DB server 123, an information coordination bridge server 131, and an information coordination server 132.

The authentication server 121 is a server that receives a customer ID and authentication information transmitted from the client device 103 via the external network 102 and the internal network 120 and determines whether or not a customer is a legitimate customer while referring to a DB that manages the customer ID and the authentication information retained by the authentication server 132.

The application server 122 is a server that receives the personal information (Know Your Customer: KYC) transmitted from the client device 103 via the external network 102 and the internal network 120 and stores the personal information in the DB server 123 via the internal network 120.

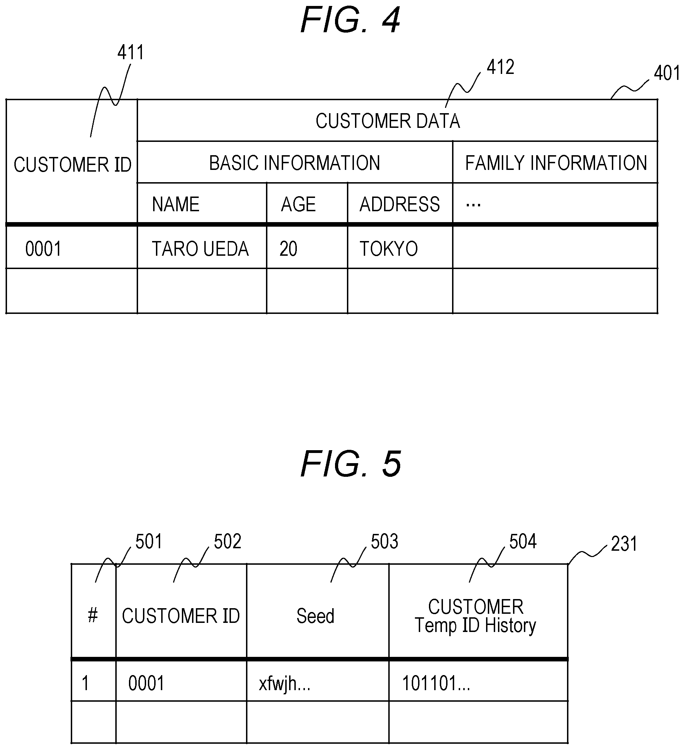

The DB server 123 is a server that retains a customer DB 401 illustrated in Fig. 4, and retains the KYC information sent from the client device 103 via the application server 122.

The information coordination bridge server 131 is a server that retains a function of connecting the authentication server 121, the application server 122, and the DB server 123 which are systems belonging to the organization and the information coordination server 132 that shares information between the organizations.

The information coordination server 132 is a server that mutually shares information constantly stored with the information coordination servers 132 of other organizations via the external network 102 in real-time synchronization with each other and enables access to information of the other organizations.

The internal network 120 is a communication facility network for communicating within the organization.

The communication facility networks of the external network 102 and the internal network 120 are, for example, the Internet, an intranet, a wired or wireless local area network (LAN), or a wide area network (WAN).

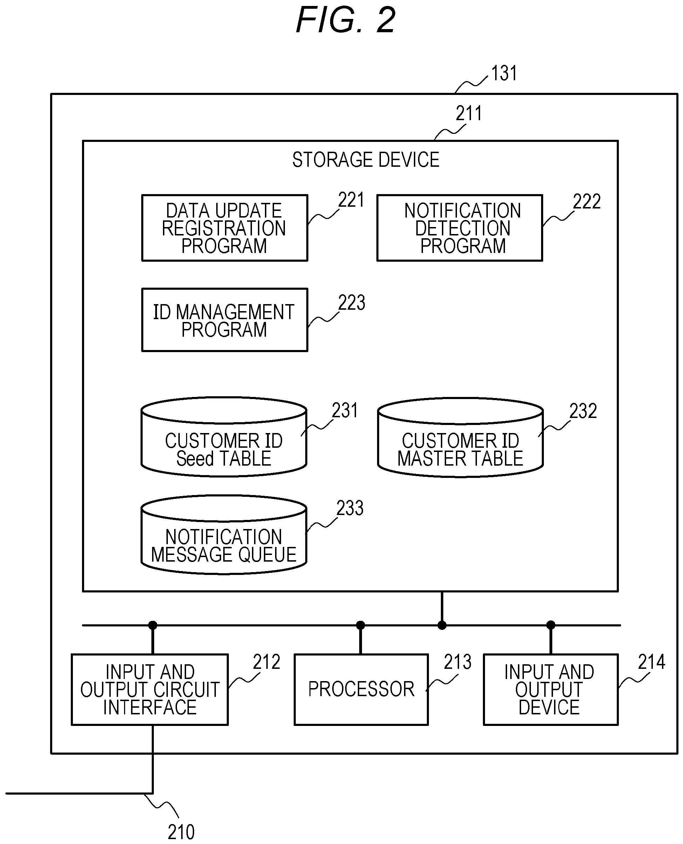

Fig. 2 is a diagram illustrating an example of hardware and functions included in the information coordination bridge server 131 illustrated in Fig. 1.

As illustrated in Fig. 2, the information coordination bridge server 131 illustrated in Fig. 1 includes an input and output circuit interface 212, a processor 213, an input and output device 214, a storage device 211, and an internal communication line connecting these components (for example, a bus).

The input and output circuit interface 212 is an interface for communicating with a communication facility network 210 such as the internal network 120 or the external network 102.

The processor 213 is an arithmetic unit and a control unit. The processor 213 executes a data update registration program 221, a notification detection program 222, and an ID management program 223 stored in the storage device 211, and thus, an information coordination function of the information coordination bridge server 131 is realized.

The input and output device 214 is a device for receiving an input of data, outputting data, or receiving and outputting data. For example, the input and output device 214 receives an input from a keyboard, a mouse, or the like, and displays the information from the processor 213 on a display. The input and output device may be connected remotely via the input and output circuit interface, the internal network, and the external network.

The storage device 211 includes a volatile storage device (dynamic access random memory (DRAM) or the like) and a non-volatile storage device (HDD, SSD, or the like).

The data update registration program 221 (data update registration unit), the notification detection program 222 (notification detection unit), the ID management program 223 (identification information management unit), a customer ID Seed table 231, a customer ID master table 232, and a notification message queue 233 are stored in the storage device 211 within the information coordination bridge server 131.

In the present embodiment, an example in which each server is implemented on a physically independent server is illustrated, but each server may be implemented on a virtual machine such as a VM or a container.

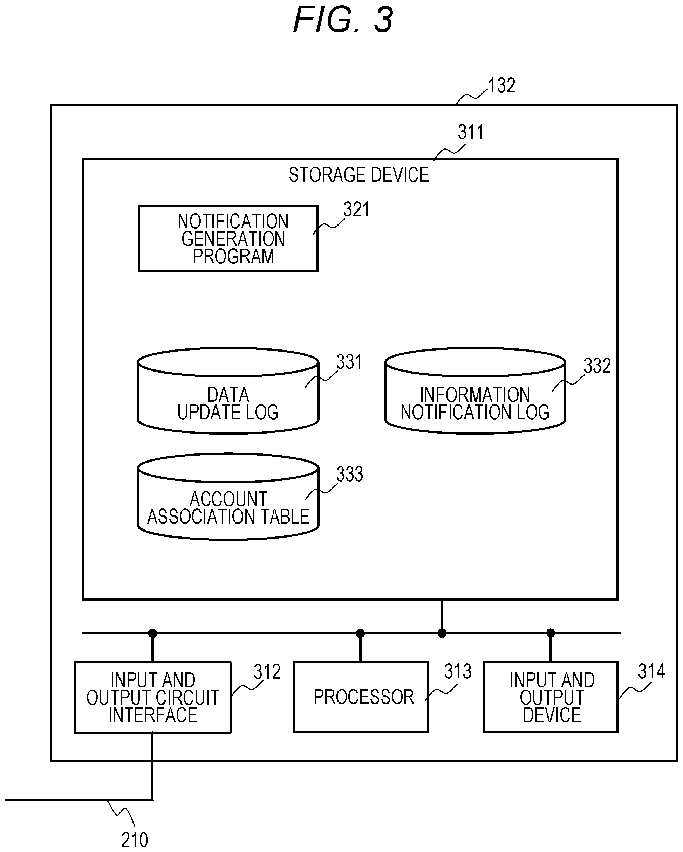

Fig. 3 is a diagram illustrating an example of hardware and functions included in the information coordination server 132 illustrated in Fig. 1.

As illustrated in Fig. 3, the information coordination server 132 illustrated in Fig. 1 includes an input and output circuit interface 312, a processor 313, an input and output device 314, a storage device 311, and an internal communication line connecting these components (for example, a bus).

The input and output circuit interface 312, the processor 313, and the output device 314 perform functions similar to the input and output circuit interface 212, the processor 213, and the input and output device 214 within the information coordination bridge server 131.

A notification generation program 321 (notification generation unit), a data update log 331, an information notification log 332, and an account association table 333 are stored in the storage device 311 within the information coordination server 132.

Fig. 4 is a diagram illustrating an example of the customer DB stored in the DB server 123 of each organization illustrated in Fig. 1.

As illustrated in Fig. 4, the customer DB stored in the DB server 123 of each organization illustrated in Fig. 1 includes a customer ID 411 for uniquely identifying the customer and customer data 412. The customer ID 411 is uniquely assigned by each organization. Information acquired by the organization from the customer and data generated or acquired when the organization services the customer are included in the customer data 412. In the present embodiment, an example in which basic information of the customer has a name, an age, an address and has family information is illustrated.

Fig. 5 is a diagram illustrating an example of the customer ID Seed table 231 illustrated in Fig. 2.

As illustrated in Fig. 5, the customer ID Seed table 231 illustrated in Fig. 2 includes an entry ID 501 for uniquely identifying an entry, a customer ID 502, a Seed 503, and a customer Temp ID History 504.

The customer ID 502 is an ID for uniquely identifying the customer in the organization, and is common to the customer ID 411 in the customer DB 401. The Seed 503 is seed information for generating a private key and a public key. In the present embodiment, the ID management program 223 generates a customer Temp ID by using a hierarchical deterministic wallet (HD wallet), and retains information corresponding to the Seed. The customer Temp ID History 504 is information indicating a set of histories of customer Temp IDs used by the customer, and in the present embodiment, an example in which a set of past customer Temp IDs is retained by a bloom filter is illustrated. As described above, it is possible to generate and manage coordination target identification information from Seed according to a predetermined rule by generating the customer Temp ID by using the hierarchical deterministic wallet.

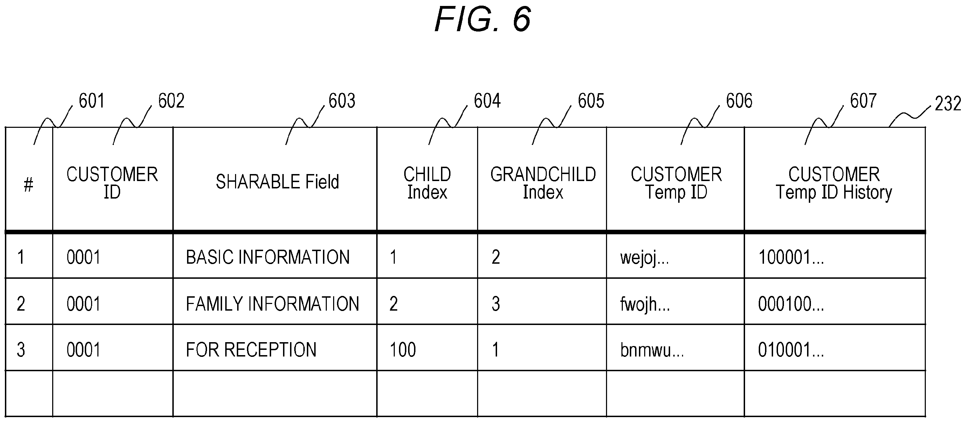

Fig. 6 is a diagram illustrating an example of the customer ID master table 232 illustrated in Fig. 2.

As illustrated in Fig. 6, the customer ID master table 232 illustrated in Fig. 2 includes an entry ID 601 for uniquely identifying an entry, a customer ID 602, a sharable Field 603, a child Index 604 (first Index value), a grandchild Index 605 (second Index value), a customer Temp ID 606, and a customer Temp ID History 607.

The customer ID 602 is an ID for uniquely identifying the customer in the organization, and is common to the customer ID 411 in the customer DB 401. The sharable Field 603 indicates that information indicating a Field in the customer DB 401 is stored and information regarding information coordination of the Field is described. The child Index 604 is information used to generate a private key and a public key, and stores an index of a first hierarchy of the HD wallet in the present embodiment. This index is generated for each set of the customer ID 602 and the sharable Field 603, and is set to be unique for each set of the customer ID 602, the sharable Field 603, and the child Index 604. The grandchild Index 605 is information used to generate a private key and a public key, and stores an index of a second hierarchy of the HD wallet in the present embodiment. This Index is a value that is incremented with a change over time, and is used to generate a new private key and a new public key by incrementing a value when a coordination range of the customer is updated, particularly a coordination organization is deleted. The customer Temp ID 606 is generated by applying a Hash function from the private key and the public key generated from the Seed 503, the child Index 604, and the grandchild Index 605. The customer Temp ID History 607 is an item equivalent to the customer Temp ID History 504, and is information indicating the set of histories of Temp IDs generated by the set of the customer ID 602 and the sharable Field 603. In the present embodiment, an example in which the set of past Temp IDs is retained by a bloom filter is illustrated.

For example, in the present embodiment, in the case of a customer with a customer ID "0001", information coordination ranges as publication ranges of "basic information" and the "family information" are separately set, the information is updated and notified by using "wejoj..." as the customer Temp ID in the information coordination of the "basic information", and the information is updated and notified by using "fwojh..." as the customer Temp ID in the information coordination of "family information".

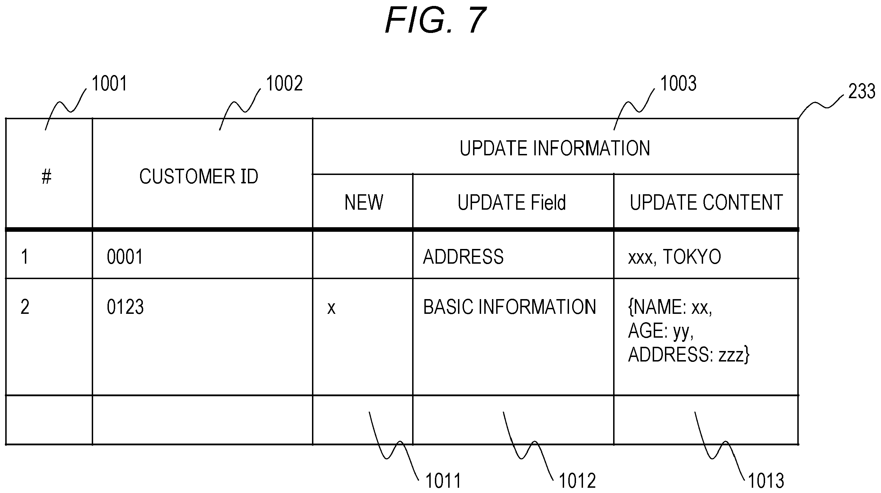

Fig. 7 is a diagram illustrating an example of the notification message queue 233 illustrated in Fig. 2.

The notification message queue 233 illustrated in Fig. 2 functions to deliver information from an information coordination platform to the system of each organization. As illustrated in Fig. 7, the notification message queue 233 includes an entry ID 1001 for uniquely identifying an entry, a customer ID 1002, and update information 1003. The customer ID 1002 is an ID for uniquely identifying the customer in the organization, and is common to the customer ID 411 in the customer DB 401. The update information 1003 includes a new 1011, an update Field 1012, and an update content 1013, the new 1011 stores flag information indicating whether or not the customer information is newly registered, the update Field stores a Field name in which information is newly added or updated, and the update content 1013 stores a specific value of the update Field.

In the present embodiment, #1 of the notification message queue indicates that an address of the customer ID "0001" is updated and a new address is "xxx, Tokyo". In the notification of the update information, the update content 1013 may be notified as it is, or the fact that the content is updated may be notified.

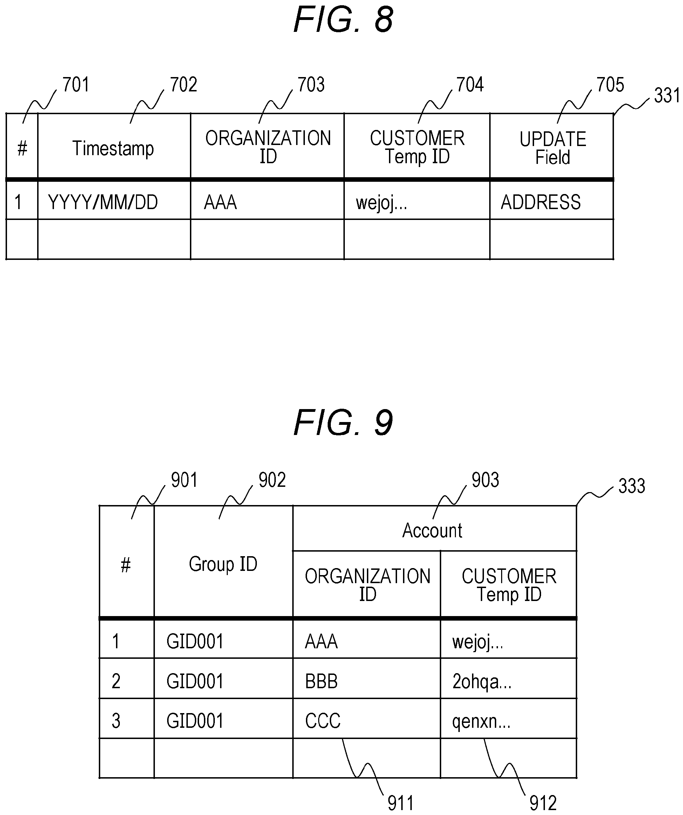

Fig. 8 is a diagram illustrating an example of the data update log 331 illustrated in Fig. 3.

The data update log 331 illustrated in Fig. 3 is a table that records, as log information, an event in which customer data is newly added or updated in a certain organization, and includes an entry ID 701 for uniquely identifying an entry, Timestamp 702, an organization ID 703, a customer Temp ID 704, and an update content 705 as illustrated in Fig. 8.

The Timestamp 702 is a Field that stores a date and time when the data is updated or a date and time when the entry is generated. The organization ID 703 stores an ID of the organization in which the information is updated, that is, an ID of the organization in which the entry is generated. The customer Temp ID 704 stores information on the customer Temp ID 606, and the update content 705 stores information indicating the customer DB and the updated Field of the customer DB.

In the present embodiment, #1 of the data update log 331 indicates that an address Field of the customer Temp ID "wejoj..." is updated in an organization "AAA" at time "YYYY/MM/DD". A field that stores an electronic signature for proving that the entry is information issued by a correct data-owning organization may be added.

Fig. 9 is a diagram illustrating an example of the account association table 333 illustrated in Fig. 3.

The account association table 333 illustrated in Fig. 3 is a table that retains association information for identifying the customers between the organizations, and manages, as a Group, accounts having a relation when the sets of the organizations and the customer Temp IDs are used as accounts. As illustrated in Fig. 9, the account association table 333 includes an entry ID 901 for uniquely identifying an entry, a Group ID 902, and an Account 903. The Group ID 902 is an ID for uniquely identifying a Group, and the Account 903 includes account information (organization ID 911 and customer Temp ID 912) included in the Group ID.

In the present embodiment, #1, #2, and #3 of the account association table indicate that a customer Temp ID "wejoj..." of an organization "AAA", a customer Temp ID "2ohqa..." of an organization "BBB", and a customer Temp ID "qenxn..." of an organization "CCC" are the same customer.

As the account association table 333, an account association table may be created for each Group ID, and may be retained in a distributed manner.

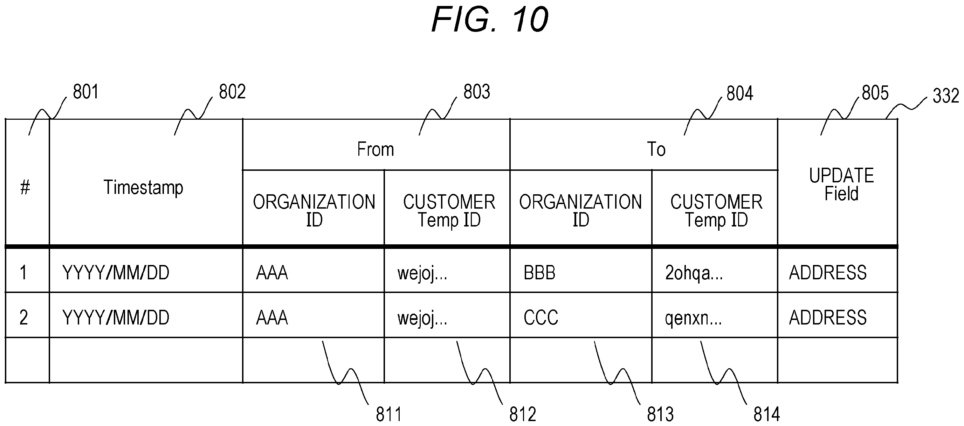

Fig. 10 is a diagram illustrating an example of the information notification log 332 illustrated in Fig. 3.

The information notification log 332 illustrated in Fig. 3 is a table intended to notify other organizations of information indicating that the customer data is newly added or is updated, and is created from the data update log 331 illustrated in Fig. 8 and the account association table 333 illustrated in Fig. 9. As illustrated in Fig. 10, the information notification log 332 includes an entry ID 801 for uniquely identifying an entry, Timestamp 802, From 802, To 804, and an update content 805. The Timestamp 802 is a Field that stores a date and time when the entry is generated. The From 803 includes an organization ID 811 and a customer Temp ID 812, and stores an organization ID of a transmission source of this notification and the customer Temp ID for identifying the customer in the organization as a transmission source. The To 804 includes an organization ID 813 and a customer Temp ID 814, and stores an organization ID of a transmission destination of this notification and a customer Temp ID for identifying the customer in the organization as a transmission destination. The update content 805 stores information indicating the updated Field of the customer DB.

In the present embodiment, #1 of the information notification log 332 indicates that information indicating that information of the customer Temp ID "wejoj..." of the organization "AAA" is updated at time "YYYY/MM/DD" is notified to the organization "BBB" and the customer ID is "2ohqa..." in the organization "BBB".

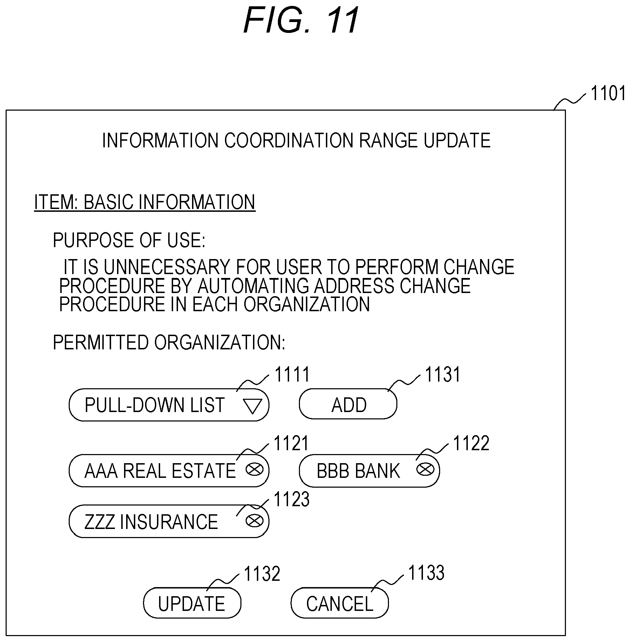

Fig. 11 is a diagram illustrating an example of an information coordination range update screen transmitted to the client device 103 from the information coordination bridge server 131 illustrated in Fig. 1.

An information coordination range update screen 1101 illustrated in Fig. 11 is transmitted from the information coordination bridge server 131 to the client device 103, and is displayed on a display unit of the client device 103.

The information coordination range update screen 1101 includes an item for coordinating information with another organization, the purpose of use, and a permitted organization, and includes a button for adding or deleting the permitted organization and an update button for confirming a change of the permitted organization. A pull-down list 1111 stores a list of candidates for the permitted organization. The permitted organization can be added by selecting the organization and clicking an add button 1131. The permitted organization can be deleted by clicking a delete button for the permitted organization, and a final permitted organization can be confirmed by clicking an update button 1132. The example of Fig. 11 illustrates that the basic information (the name, the age, and the address) of the customer DB 401 as an item for coordinating the information with another organization is an information coordination target. "AAA real estate", "BBB bank", and "ZZZ insurance" are listed as the permitted organizations.

Information regarding the terms of use of the personal information or a link thereof may be added and displayed on the information coordination range update screen 1101.

In the inter-organizational information coordination platform system 101 having the aforementioned configuration, the ID management program 233 of the information coordination bridge server 131 manages association information for associating the organizations for the customer to be coordinated with at least one item information between at least two organizations and the item information as the Field included in the customer information by performing the addition of the customer ID (customer ID registration 1508) to the account association table 333 of the information coordination server 132 or the deletion of the customer ID from the account association table 333 (actually, performing customer ID registrations 1605 and 1607 using the new customer Temp ID again). When the item information of the customer is updated in any of the organizations, the data update registration program 221 records data update information indicating the organization, the customer, and the item information in the data update log 331. By doing this, the notification generation unit 321 notifies the organization associated with the organization in which the item information is updated in the account association table 333 of the fact that the item information of the customer is updated based on the data update information recorded in the data update log 331. As described above, when the organizations are associated for the customer to be coordinated with the item information between the organizations and the item information and the item information of the customer is updated in any of the organizations, since the fact that the item information of the customer is updated is notified to the organization associated with the organization in which the item information is updated in the association information, the customer information managed by each of the plurality of organizations can be appropriately coordinated.

In the above-described configuration, it is considered that the ID management program 223 generates the customer Temp ID as the coordination target identification information for uniquely specifying a combination of the item information and the customer to be coordinated between the organizations within the organization for each organization, and associates the customer Temp IDs of the organizations to be coordinated with this combination, the data update registration program 221 specifies the customer Temp ID indicating the combination of the customer of which the item information is updated and the item information, and the notification generation program 321 generates notification information for notifying the organization corresponding to the customer Temp ID associated with the specified customer Temp ID of the fact that the item information of the customer is updated. With such a configuration, desired item information of a desired customer can be coordinated between desired organizations.

As described above, it is considered that since the ID management program 223 saves the past customer Temp ID as the customer Temp ID History 504 which is the history thereof in the bloom filter, the notification detection program 222 searches for the customer Temp ID History 504 saved in the bloom filter based on the customer Temp ID included in the notification, and determines whether or not to receive the notification. With such a configuration, past coordination target identification information can be saved space-efficiently, and can be searched at a high speed.

In the above-described configuration, the ID management program 223 can assign the Seed to the customer, can assign the child Index as the first Index value to the item information, can assign the grandchild Index as the new second Index value to the customer and the item information whenever the customer Temp ID is generated, and can generate and manage the customer Temp ID according to a predetermined rule when the customer Temp ID is generated.

When the ID management program 223 displays the information coordination range update screen 1101 on which the customer designates the item information and the organizations as coordination targets on the client device 103 as illustrated in Fig. 11, the customer can designate the item information to be coordinated between the organizations on the customer information and the organizations to be coordinated.

Hereinafter, specific processing executed by each program in the inter-organizational information coordination platform system 101 having the aforementioned configuration will be described.

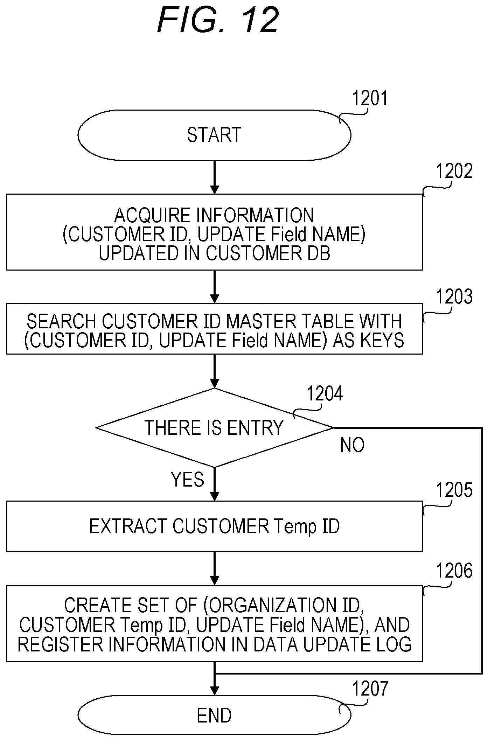

Fig. 12 is a diagram illustrating an example of processing of the data update registration program 221 illustrated in Fig. 2.

The data update registration program 221 starts the processing when information on new registration or entry update of the customer DB is received from the DB server 123 (step 1201).

The data update registration program 221 first acquires update information about the customer ID and update Field name in the customer DB (step 1202).

Subsequently, the data update registration program 221 searches for the customer ID 602 and the sharable Field 603 of the customer ID master table 232 by using, as keys, the customer ID and the update Field name acquired in step 1202 (step 1203).

When there is an entry for the customer ID and the update Field name acquired in step 1202 (step 1204), the customer Temp ID is extracted from this entry (step 1205), the entry of the data update log 331 is created and registered based on the organization ID and the update Field name of the host organization and the customer Temp ID extracted in step 1205 (step 1206), and the program is ended (step 1207).

When there is no entry in step 1204, the program is ended without performing the processing of step 1205 and step 1206.

In the search of step 1203, when the updated Field name is included in a subordinate item of the sharable Field name, this entry is also presented as a search result. That is, a case where the updated Field name is "address" means that all the sharable fields having "address", "basic information", and "customer data" are hit.

As a trigger for activating the processing of the data update registration program 221, a timing at which the input and output of the customer DB of the DB server 123 are monitored and the new registration or update of the customer DB is detected may be a trigger.

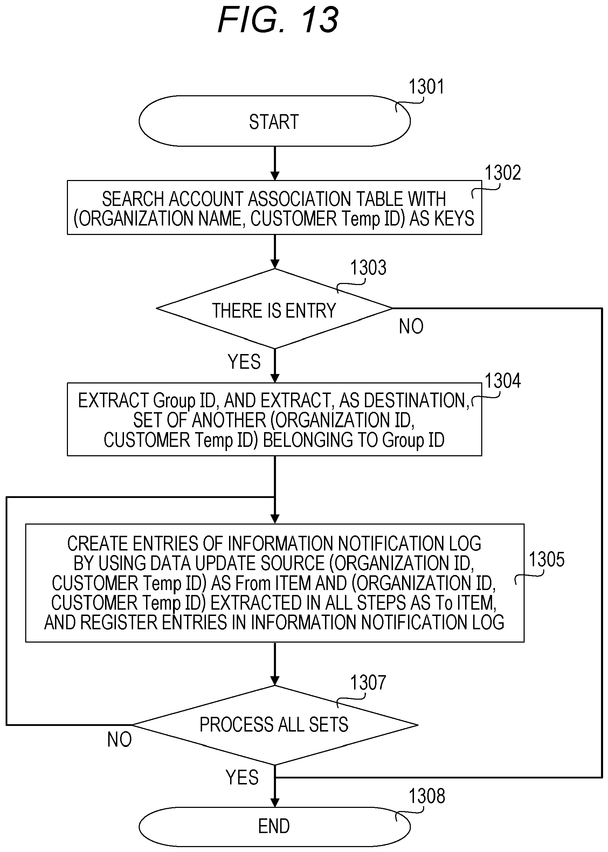

Fig. 13 is a diagram illustrating an example of processing of the notification generation program 321 illustrated in Fig. 3.

The notification generation program 321 is a program that notifies another organization of the fact that the information is updated by detecting the update of the customer DB from the data update log 331, extracting a notification destination of the information by using the account association table 333, and generating the entry of the information notification log 332.

The notification generation program 321 monitors the data update log 331, and starts execution upon the addition of a new entry (step 1301).

When the addition of the new entry is detected, the notification generation program 321 searches for a past entry of the account association table 333 by using, as keys, the organization ID and customer Temp ID of the data update log 331 (step 1302).

When there is the entry for the organization ID and the customer Temp ID of the data update log 331 (step 1303), the notification generation program 321 extracts the Group ID, and extracts a set of another organization ID and customer Temp ID having this Group ID (step 1304). The extracted set of the organization ID and the customer Temp ID is "To" as the destination of the notification.

Subsequently, the notification generation program 321 sets the organization ID and the customer Temp ID in the data update log 331 to the From 803 and sets the set of the organization ID and customer Temp ID extracted in step 1304 to the To 804, stores the update content 705 of the data update log 331 in the update content 805, creates the entry of the information notification log 332, and adds the entry to the information notification log 332 (step 1305).

The notification generation program 321 performs the processing of step 1305 for all the sets of the organization IDs and the customer Temp IDs extracted in step 1304, and when the processing is completed for all the sets (step 1307), the notification generation program is ended (step 1308). That is, when the combination of the customer and the item information is updated, the notification generation program 321 adds, as the notification of the fact that the item information of the customer is updated, the customer Temp ID for specifying the customer and the item information to the information notification log 332.

When there is no entry for the organization ID and the customer Temp ID of the data update log 331, it is determined that there is no organization to be notified, and the program is ended.

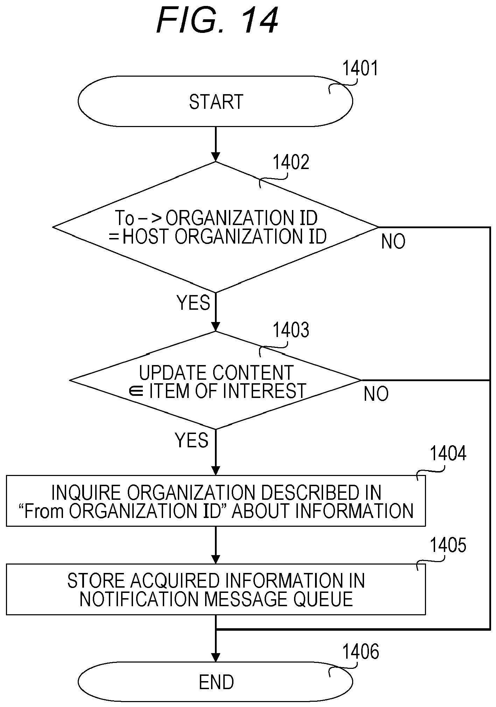

Fig. 14 is a diagram illustrating an example of the notification detection program 222 illustrated in Fig. 2.

The notification detection program 222 is a program that receives the notification of the fact that the item information of the customer is updated, monitors the entries of the information notification log 332, detects the information notification addressed to the host organization, generates an information notification for the system within the organization, and stores the information notification in the notification message queue.

The notification detection program 321 monitors the information notification log 332, and executes processing at a timing when the new entry is added (step 1401).

The notification detection program 321 confirms the organization ID 813 of the new entry To 804, and extracts the new entry addressed to the host organization (step 1402).

When the new entry is addressed to the host organization, the notification detection program 321 confirms the update content 805, and confirms whether or not an item included in an interest item list of the host organization is updated (step 1403). Here, the interest item list is a list of Fields desired to be monitored which are created based on a customer event of interest in the host organization. For example, when a service in which the organization does business for the customer based on a change in the address of the customer is considered, the update of the "address" Field of the customer DB is a matter of interest. In this case, it is possible to efficiently detect the update of the corresponding Field by setting "address" or "basic information 412" in the interest item list.

When the update content 805 is included in the interest item list in step 1403, detailed information is inquired to the organization indicated by the organization ID 811 of the From 803 (step 1404). The inquiry specifies the content of the inquiry by adding the customer Temp ID 812 and the update content 805. A method of sharing data including the content in a sharing storage or the like by using an encryption technology or the like may be used as the method of specifying the content. The acquired detailed information is added and stored in the notification message queue 233 (step 1405), and the program is ended (step 1406).

Meanwhile, when the new entry is an entry addressed to another organization, the processing is ended.

When the update content 805 is not included in the interest item list in step 1403, the processing is ended. Accordingly, it possible to suppress the generation of subsequent notification messages.

As described above, the present function can acquire only appropriate information notifications even when the number of items (Fields) increases as the number of participating organizations increases.

As described above, when the combination of the customer and the item information is updated, the notification generation program 321 adds, as the notification of the fact that the item information of the customer is updated, the customer Temp ID for specifying the customer and the item information to the information notification log 332, and thus, the notification detection program 222 determines whether or not to receive the notification of the fact that the item information of the customer is updated based on the customer Temp ID added to the information notification log 332. At this time, the ID management program 223 maintains the past customer Temp ID and the association information thereof even after the new customer Temp IDs are associated in the account association table 333, and allows the notification detection program 222 to receive the notification including the past customer Temp ID. As described above, since it is possible to receive the notification included in the past customer Temp ID, when the customer Temp ID and the association thereof are updated, it is possible to receive the notification generated based on the past customer Temp ID and the association thereof before the update is completely reflected.

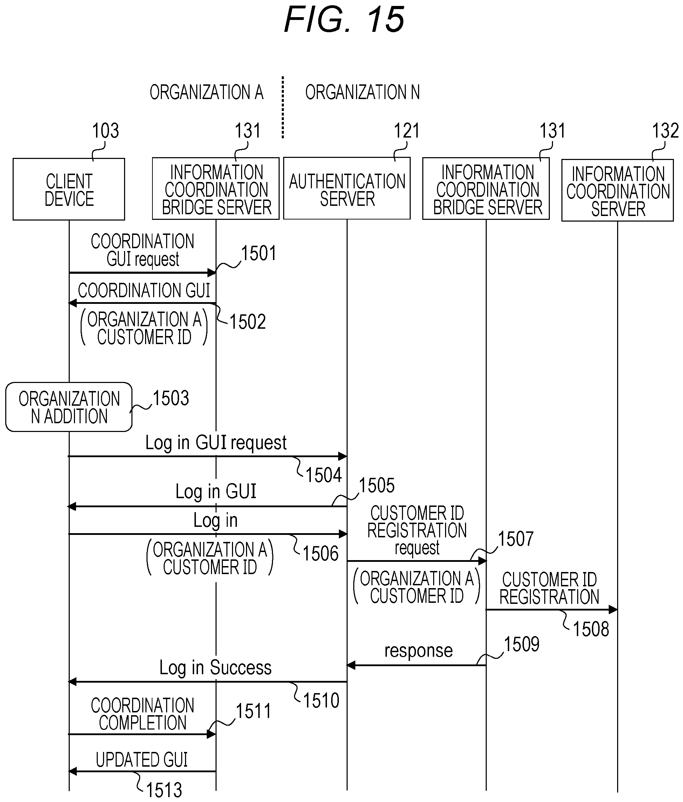

Fig. 15 is a diagram illustrating an example of a processing sequence when the ID management program 221 illustrated in Fig. 2 adds the information coordination range.

The processing of the information coordination bridge server 131 in this sequence is executed by the ID management program 223, and the processing of the ID management program 223 will be described with reference to this diagram.

The update of the information coordination range is started by the request of the customer, and is processed via the client device 103. When the client device 103 requests the information coordination bridge server 131 to display the information coordination range update GUI 1101 illustrated in Fig. 11 (step 1501), the information coordination bridge server 131 assigns the organization ID, the customer Temp ID, and the electronic signature on the information coordination range update GUI 1101, and transmits the organization ID, the customer Temp ID, and the electronic signature to the client device 103 (step 1502). Here, an example in which the customer newly adds an organization N to the permitted organization will be described.

When the customer selects the organization N from the pull-down list 1111 on the information coordination range update GUI 1101 and clicks the add button 1131 (step 1503), the customer is redirected to the authentication server of the organization N. Specifically, a Login GUI request is performed (step 1504).

By doing this, the login GUI is transmitted from the authentication server 121 of the organization N (step 1505), and the customer logs in with the authentication ID and the authentication information of the organization N (step 1506). When the customer logs in, the organization ID, the customer Temp ID, and the electronic signature acquired in step 1502 are transmitted together.

The authentication server 121 of the organization N performs authentication processing of the customer, and transmits a customer ID registration request to the information coordination bridge server 131 of the organization N when the authentication is successful (step 1507). The customer ID registration request includes the customer ID of the customer in the organization N in addition to the organization ID, the customer Temp ID, and the electronic signature acquired from an organization A.

The information coordination bridge server 131 of the organization N generates the customer Temp ID by newly adding the entry to the customer ID master table 232 by using the customer ID of the organization N. The Group ID of the Group to which the account information (the organization ID of the organization A and the customer Temp ID of the organization A) belongs is assigned to the account information (the organization ID of the organization N and the customer Temp ID), and the account information is registered in the account association table 333 (step 1508).

The information coordination bridge server of the organization N reruns a response including the organization ID of the organization N and the generated customer Temp ID to the authentication server (step 1509).

The authentication server 121 of the organization N returns a notification that the authentication is successful to the client device 103 including the organization ID of the organization N and the customer Temp ID (step 1510).

Subsequently, when the obtained organization ID of the organization N and the obtained customer Temp ID are transmitted from the client device 103 to the information coordination bridge server 131 of the organization A (step 1511), the information coordination bridge server 131 of the organization A can confirm that the customer information is linked between the organizations by including the organization ID of organization N and the customer Temp ID, adds the organization N to the permitted organization, and transmits the updated information coordination range update GUI to the client device 103 (step 1513).

Although it has been described in the present embodiment that the information coordination bridge server 131 communicates directly with the client device 103, a method of exchanging the information via the authentication server 121 and the application server 122 may be used for unifying communication with the client device 103.

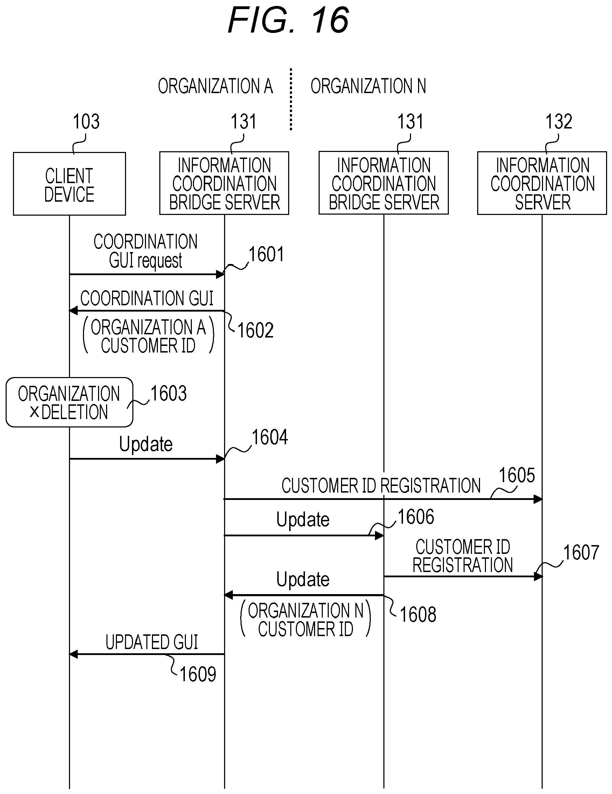

Fig. 16 is a diagram illustrating an example of a processing sequence when the ID management program 221 illustrated in Fig. 2 updates the information coordination range. Specifically, this sequence is a sequence for deleting the permitted organization, and the addition and the deletion of the permitted organization can be realized by matching with a sequence for adding the permitted organization illustrated in Fig. 15.

The update of the information coordination range is started by the request of the customer, and is processed via the client device 103. When the client device 103 requests the information coordination bridge server 131 to display the information coordination range update GUI 1101 illustrated in Fig. 11 (step 1601), the information coordination bridge server 131 of the organization A assigns the organization ID, the customer Temp ID, and the electronic signature to the information coordination range update GUI 1101 illustrated in Fig. 11, and transmits the information coordination range update GUI to the client device 103 (step 1602). Here, an example in which the customer deletes an organization x from a permitted organization list (including the organization N and the organization x) will be described.

When the customer deletes the organization x and clicks the update button 1132 on the information coordination range update GUI 1101 (step 1603), an update request for the permitted organization is transmitted to the information coordination bridge server (step 1604).

By doing this, the ID management program 223 of the information coordination bridge server 131 of the organization A specifies an updated part of the customer Temp ID based on the updated part. For example, when the organization x is deleted from a shared part of the customer ID "0001" and the sharable Field "basic information", #1 of the customer ID master table is specified. The Group ID to which the customer Temp ID belongs is specified from the account association table, and other account information belonging to the Group ID is acquired as a linked account.

Subsequently, the ID management program 223 of the information coordination bridge server 131 increments the grandchild Index of the entry, and generates a new customer Temp ID. A new Group ID is assigned to the generated customer Temp ID, and the generated customer Temp ID is registered in the account association table (step 1605).

Subsequently, the ID management program 223 of the information coordination bridge server 131 transmits a request to update the customer Temp ID of the customer to the organizations excluding the organization x from the linked account information (step 1606). In this example, the organization x is excluded from the list, and the request is transmitted to only the organization N. The update request 1606 includes the customer Temp ID of the organization N and the customer Temp ID newly created by the organization A.

When the update request 1606 is received, the information coordination bridge server of the organization excluding the organization x searches the customer ID master table by using, as the key, the customer Temp ID of the organization N, and extracts the entry. The grandchild Index of the entry is incremented, the new customer Temp ID is generated, and the customer Temp ID is additionally registered in the Group to which the new customer Temp ID of the organization A belongs (step 1607).

The fact that the registration is completed is notified to the information coordination bridge server 131 of the organization A (step 1608).

The information coordination bridge server 131 of the organization A transmits the information coordination range update GUI 1101 in which the deletion is reflected to the client device 103 (step 1609).

As described above, when the ID management program 223 deletes any organization from a group of organizations that associate the customer Temp IDs with each other, the new customer Temp ID is generated for the remaining organizations of the group excluding the deleted organization and the new customer Temp IDs are associated with each other, a possibility that the update of the customer information is leaked to the organization deleted from the group can be reduced.

The above-described embodiment is an example for describing the present invention, and is not intended to limit the scope of the present invention to the embodiment. Those skilled in the art can implement the present invention in various other aspects without departing from the scope of the present invention.

## Claims

1. An information coordination platform system that coordinates a plurality of organizations that each manages customer information including a plurality of pieces of item information regarding a customer with each other, the system comprising:
an identification information management unit (223) that manages association information for associating the organizations for the customer to be associated with at least one item information between at least two organizations and the item information;
a data update registration unit (221) that records data update information indicating the organizations, the customer, and the item information when the item information of the customer is updated in any of the organizations; and
a notification generation unit (321) that notifies the organization associated with the organization in which the item information is updated in the association information of a fact that the item information of the customer is updated based on the data update information.

2. The information coordination platform system according to claim 1, wherein
the identification information management unit (223) generates coordination target identification information for uniquely specifying a combination of the customer and the item information to be coordinated between the organizations within the organization for each organization, and associates the pieces of coordination target identification information of the organizations to be coordinated with the combination,
the data update registration unit (221) specifies the coordination target identification information indicating the combination of the customer of which the item information is updated and the item information, and
the notification generation unit (321) generates notification information for notifying the organization corresponding to the coordination target identification information associated with the specified coordination target identification information of the fact that the item information of the customer is updated.

3. The information coordination platform system according to claim 2, wherein
when any organization is deleted from a group of the organizations that associate the pieces of coordination target identification information, the identification information management unit (223) generates pieces of new coordination target identification information for the remaining organizations of the group excluding the deleted organization, and associates the pieces of new coordination target identification information.

4. The information coordination platform system according to claim 3, further comprising
a notification detection unit (222) that receives the notification of the fact that the item information of the customer is updated,
wherein the notification generation unit (321) adds the coordination target identification information for specifying the customer and the item information to a notification of a fact that the combination of the customer and the item information is updated,
the notification detection unit (222) determines whether or not to receive the notification based on the coordination target identification information included in the notification, and
the identification information management unit (223) allows the notification detection unit (222) to receive a notification including past coordination target identification information by maintaining the past coordination target identification information and association information even after the pieces of new coordination target identification information are associated.

5. The information coordination platform system according to claim 4, wherein
the identification information management unit (223) saves the past coordination target identification information in a bloom filter, and
the notification detection unit (222) searches for the past coordination target identification information saved in the bloom filter and determines whether or not to receive the notification based on the coordination target identification information included in the notification.

6. The information coordination platform system according to claim 2, wherein
the identification information management unit (223) generates the coordination target identification information by using a hierarchical deterministic wallet.

7. The information coordination platform system according to claim 6, wherein
the identification information management unit (223) generates the coordination target identification information by assigning a Seed to the customer, assigning a first Index value to the item information, and assigning a new second Index value whenever the coordination target identification information is generated from the customer and the item information.

8. The information coordination platform system according to claim 2, wherein
the identification information management unit (223) displays a screen on which the customer designates the item information and the organizations to be coordinated on a display unit.

9. An information coordination method executed by a computer for coordinating a plurality of organizations that each manages customer information including a plurality of pieces of item information regarding a customer with each other, the method comprising:
managing association information for associating the organizations for a customer to be associated with at least one item information between at least two organizations and the item information;
recording data update information indicating the organizations, the customer, and the item information when the item information of the customer is updated in any of the organizations; and
notifying the organization associated with the organization in which the item information is updated in the association information of a fact that the item information of the customer is updated based on the data update information.

10. An information coordination bridge device that cooperates with an information coordination device in an information coordination system that coordinates a plurality of organizations which each manages customer information including a plurality of pieces of item information regarding a customer with each other, the information coordination bridge device comprising:
an identification information management unit (223) that manages association information for associating the organizations for a customer to be coordinated with at least one item information between at least two organizations and the item information; and
a data update registration unit (221) that records data update information indicating the organizations, the customer, and the item information when the item information of the customer is updated in any of the organizations, wherein
the information coordination device allows a fact that the item information of the customer is updated to be notified to the organization associated with the organization in which the item information is updated in the association information based on the data update information.
